Europäisches Patentamt

European Patent Office

Office européen des brevets

(11) Publication number : **0 571 149 A2**

(12) **EUROPEAN PATENT APPLICATION**

(21) Application number : 93303772.3

(22) Date of filing : 17.05.93

(51) Int. Cl.⁵ : **G03F 7/20**

(30) Priority : **22.05.92 GB 9210988**

(43) Date of publication of application :
**24.11.93 Bulletin 93/47**

(84) Designated Contracting States :
**DE FR GB**

(71) Applicant : **CHELGRAPH LIMITED**
**P.O. Box 102, Wedgwood Way**
**Stevenage, Hertfordshire SG1 4QN (GB)**

(72) Inventor : **Kyte, Derek John**
**The Old Rectory, Whittington**
**Cheltenham, Glos. GL54 4HB (GB)**
Inventor : **Davy, Rex William**
**26 Great Norwood Street**
**Cheltenham, Glos. GL50 2AP (GB)**

(74) Representative : **Skone James, Robert**
**Edmund**
**GILL JENNINGS & EVERY Broadgate House 7**
**Eldon Street**
**London EC2M 7LH (GB)**

(54) **Imagesetter.**

(57)   An imagesetter comprises a transparent record medium support in the form of a semi-cylinder (1) for supporting on one surface a record medium having a radiation sensitive surface facing the support. A rotatable mirror (2) is positioned so as to scan an incoming, modulated radiation beam (21) across the record medium, the beam passing through the support onto the record medium. A focussing lens (3) focusses the radiation beam onto the record medium.

Fig.1.

EP 0 571 149 A2

The invention relates to an imagesetter.

Imagesetters are machines for exposing images primarily onto light sensitive emulsions. In general, the imaged material is subsequently used for the production of printing plates. However, it is sometimes possible to image a printing plate directly in an imagesetter, thus avoiding the intermediate step.

Most modern imagesetters use a laser as the image light source. The laser beam is focussed to a fine spot and this spot is traversed across the whole area of the light sensitive emulsion in a series of parallel lines. Typically, there would be 2540 of such lines per inch. During this scanning process, the beam brightness is controlled by electronic means so that dots (pixels) along each line can be exposed to various levels. On the final image, these dots will be black, white or some intermediate tone. Usually, but not invariably, the modulation frequency is arranged so that there will be as many exposable dots (pixels) along each inch of scan line as the number of such lines per inch. If the latter figure is 2540, therefore, the number of pixels per square inch will be 6,451,600.

By suitable modulation of the laser intensity, it is possible to image text and vector graphics, as well as the individual screen dots which make up a half-tone picture. It is also possible to make several successive half-tones, each of which represents part of the colour content of an original colour picture. From these, colour printing plates can be produced. However, if an imagesetter is to be used for colour, it is important that it is able to produce successive images of the same size, otherwise it will not be possible to register the various colours when printing the final picture.

In "flat-bed" imagesetters a laser beam is deflected by means of a rotating polygon mirror or a galvanometer mirror. The deflected beam is passed through field flattening optics and exposes a scan line on the film or other light sensitive material. This material, which is held flat, is moved steadily in a direction at right angles to the scan line so that successive scan lines are spaced apart. Such machines require very high precision optics and mechanics if they are to produce high quality images. Moreover, because the film moves during exposure, and the tension in the film may vary, it is difficult to guarantee that successive images will always be exactly the same size. For these reasons, it is generally accepted in the industry that flat bed imagesetters are not suitable for the highest quality colour imaging.

In external drum imagesetters, the film is fixed emulsion out to the external surface of cylindrical rotating drum. The exposing light beam is focussed onto the film and, as the drum rotates, moves parallel to the axis of the drum. This movement is usually produced by a lead screw mechanism. Because the film is fixed to the drum and is not being stretched during exposure, and because the optics do not require field flattening elements and can thus be of very simple design, these machines give images which are of very high quality and which do not vary in size. They are, therefore, widely used for quality colour work.

However, because it is not possible to rotate the drum at very high speeds, such machines tend to be slow. It is possible to use multiple beams so that several scan lines are exposed for each revolution of the drum, but this tends to increase the complexity and cost of the machines.

In an internal drum imagesetter, the film or other light sensitive material is held on the inner surface of part of a cylindrical drum. The latter is usually made of metal. Both drum and film are stationary during exposure. A modulated beam of light is projected along the axis of the cylinder and deflected onto the film by a mirror rotating about the axis. During scanning, the mirror assembly moves along the axis to provide the required scanline spacing. Because the mirror assembly is small and light, it can rotate at very high speeds (10000-30,000 RPM). Also, because the optical path is constant and no field flattening is required, the optics are simple and give very precise control over dot shape and intensity. Thus internal drum imagesetters are fast and of high quality and are rapidly becoming the most popular machines for high quality colour work.

However, holding the film firmly on the drum surface usually requires vacuum, which adds to the cost of the machine. Also, the mechanisms for loading and unloading the film tend to be complex and expensive.

In accordance with the present invention, an imagesetter comprises a transparent record medium support for supporting on one surface a record medium having a radiation sensitive surface facing the support; scanning means for causing relative scanning movement between the record medium and a modulated radiation beam passing through the support onto the record medium; and focussing means for focussing the radiation beam substantially onto the one surface of the support.

This new imagesetter has all the advantages of a conventional internal drum imagesetter, namely simple and accurate optics, the ability to scan at high speed, and the fact that the record medium is stationary during exposure. In addition it enables the record medium to be loaded and unloaded much more simply and to be held firmly against the support in contrast to the problems in this connection which arise with an internal drum imagesetter.

In this context, "transparent" means that the support is transparent to the radiation which is used. This will typically be in the optical wavelength range although radiation at a wavelength outside the optical range could also be used, for example ultraviolet or infrared.

Although the support could have a planar form, preferably the support is partly or fully cylindrical. This simplifies the beam control arrangements allowing a simple rotating reflector, for example, to be utilised to achieve part of the scanning movement. Furthermore the invention can overcome an inherent problem which would arise in this situation. That is, the cylinder acts as a cylindrical lens and produces an optical aberration. However, the scanning means, when in the form of a plane mirror, distorts due to the high speed of rotation and it is possible to match the optical properties for the cylinder (thickness and refractive index) to the distortion of the spinning mirror so as to almost precisely cancel the distortions.

Typically, the scanning means comprises a rotatably mounted reflector and means for causing relative tracking movement between the support and the reflector.

A particular advantage of this type of imagesetter is the high speed at which the reflector can be rotated. However, at very high speeds it becomes necessary to use air bearings and these can be expensive. This can be obviated by making use of a multi-facet reflector to enable multiple scanlines to be achieved per revolution.

Preferably, the imagesetter further comprises means for holding a record medium on the support under tension. For example, this could be implemented by utilising spaced pairs of pinch rollers which are subjected to torque in opposite directions to create tension in the record medium.

In some cases, the record medium could be laid manually on the support. However, the invention is particularly suited to automatic loading and preferably therefore further comprises means for feeding a record medium alongside the support while spaced from the support until it is located adjacent its final position. To achieve accurate feeding, guides may be placed around the support.

An example of an imagesetter according to the invention will now be described with reference to the accompanying drawings, in which:-

Figure 1 is a schematic view of the optical components of the apparatus;

Figure 2 is an end elevation of the apparatus with some parts removed for clarity;

Figure 3 is a section through the cylinder of Figure 2 in the direction "A";

Figure 4A and Figure 4B are end and side elevations of a multi-faceted mirror respectively;

Figure 5 is a block diagram of the pixel clocking system;

Figure 6 is a block diagram of a pixel clock synchronisation scheme;

Figure 7 is a schematic plan of the apparatus; and,

Figure 8 is a schematic end view of the apparatus shown in Figure 7.

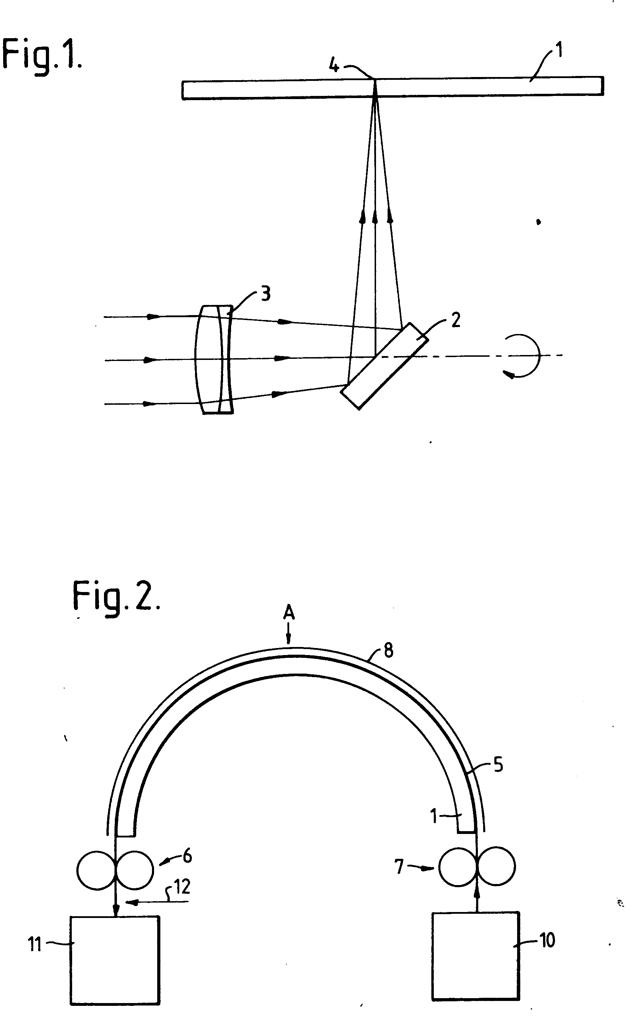

The imagesetter shown in Figures 1, 2, 8 and 9 comprises a semi-cylindrical, transparent support 1. In general the support will not be exactly a half cylinder but extend through about 170°. It is important that this support or drum is transparent to the illuminating radiation and that it does not contain bubbles or other inclusions. However, this is easy to achieve with modern synthetic materials and also with glass if carefully selected and processed.

The drum 1 also has to be formed into an accurate cylindrical shape of reasonably constant thickness. Optical calculations show that the tolerances required are easily achievable with modern fabrication techniques. The fact that the light beam passes through the cylinder wall means that the latter will act like a large radius cylindrical lens and will cause some astigmatism in the focussed spot. However, optical calculations show that this effect is insignificant. Even if it were not, it would be possible to correct for it by mounting a low power cylindrical lens before or after the mirror.

Alternatively, as mentioned earlier, use can be made of the compensating distortion of the mirror when rotating. From a finite element analysis of the shape of an aluminium mirror when rotating at speed, we find that it curves, and has an optical cylindrical effect of $0.2\lambda$ ($\lambda$ is the wavelength of the radiation beam). The cylinder 1 also has a cylindrical effect, of $0.1\lambda$ at 6mm thickness, $0.15\lambda$ at 7mm, and $0.25\lambda$ at 8mm. From this a cylindrical thickness can be chosen, at least in part to compensate for the distortion of the spinning mirror. In some cases, there are other factors which may dictate that precise compensation is not wanted, such as excessive thickness of the cylinder (leading to excess mass, and cost).

Mounted within the drum 1 is a mirror 2 supported on a shaft 23. Laser light from a laser diode 20 passes to optics 40 is expanded and collimated, modulated with image information in a conventional manner, and supplied to a focussing lens 3 (Figure 1) mounted on the axis of the drum 1 from which it passes to the mirror 2 and is focussed onto the outer surface 4 of the drum 1. The mirror 2 is rotated by a motor 22.

The laser diode 20, optics 40, mirror 2 and motor 22 are all mounted on a base member 41 which can be moved axially relative to the cylinder 1 by a leadscrew 42 controlled by a motor 43.

In use, as will be explained in more detail below, a film or record medium 5 is held on the outer surface 4 of the drum 1 under tension with its radiation sensitive surface facing the drum. During exposure, the laser beam is modulated in a conventional manner, pixel by pixel, while the mirror 2 is rotated at high speed by the motor 22 while being moved axially by the lead screw 42. This causes the record medium to be exposed to a series of cylindrical scanlines.

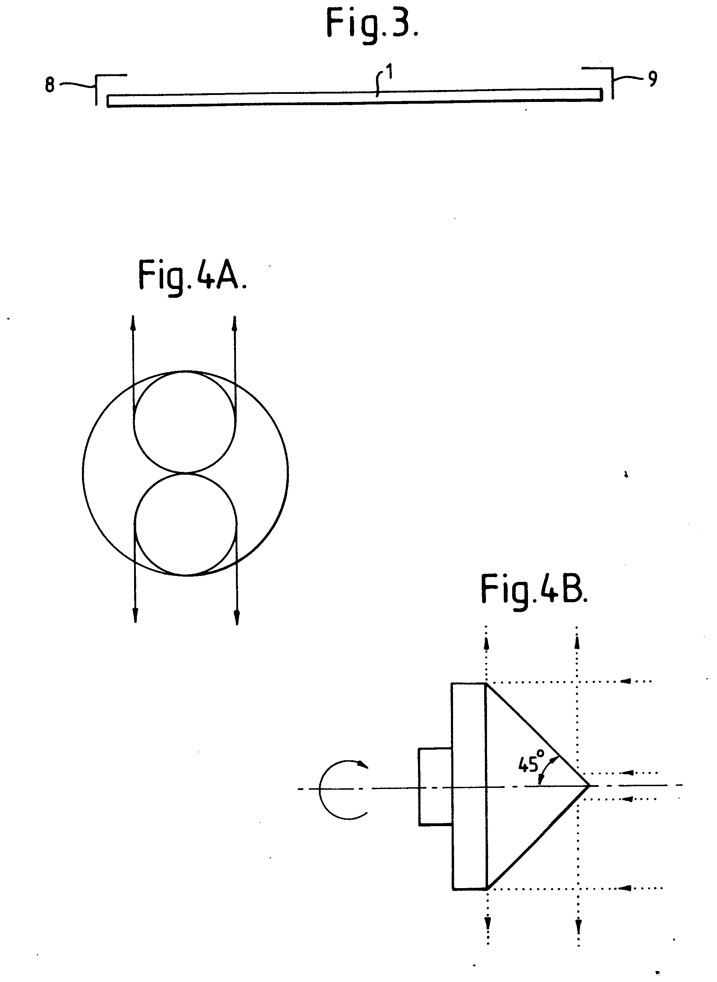

As explained above, one of the main advantages of the invention is the ability to combine the advantages of an internal image setter with external loading of film. Figure 2 illustrates one way in which the imagesetter can be designed to achieve automatic loading of film. At either end of the drum surface is a pair of rollers 6, 7. One roller of each pair 6,7 is driven by an electronically controlled torque motor (not shown). Above both sides of the drum surface are provided film guides 8,9 (Figure 3).

On loading new film, the operator pushes the end of the film 5 from a feed cassette 10 into the entry pinch rollers 7. A machine housing (not shown) is then closed (and becomes light tight) and the load procedure initiated. The entry torque motor starts up and pushes the film 5 round the drum 1. During this process, the outside (non-emulsion surface) of the film scrapes against the underneath of the guides 8,9. Contact between the emulsion side and the drum is minimal, and is not sufficient to cause abrasion of the drum surface, or of the film emulsion.

During this process, the exit torque motor is energised at low power, so that when the film reaches the exit pinch rollers 6 it will be able to pass through into a take-up cassette 11, but in no sense will it be dragged through. At the exit side of the rollers 6 a sensor (not shown) will detect the presence of the film and the following then happens:

For a fixed time, the process continues as before to ensure that the exposed "trailer" is inside the cassette 11. The entry torque motor is then reversed and, at the same time, the exit motor is switched to full power. This creates tension in the film 5 and holds it firmly down onto the surface 4 of the drum 1.

For advancing the film prior to exposing a new page, the exit motor goes to low power and the input motor is reversed again.

Other methods of tensioning the film are also possible, for example by making use of a weighted bar (spring) system that allows the motor to "run-up" to achieve tension.

Once the exposed film has been received in the output cassette 11, a knife 12 is activated to cut the film.

An advantage of this type of drum scanner is that it is potentially fast because the mirror can be rotated at high speed. However, at very high speeds it becomes necessary to use air bearings and these are expensive. To obviate this, it is possible to use a multi-facet rotating mirror. Figures 4A and 4B shows such a system using a dual facet mirror. Clearly, this will expose two scan lines per revolution, thus enabling cheaper bearings to be used for any given speed.

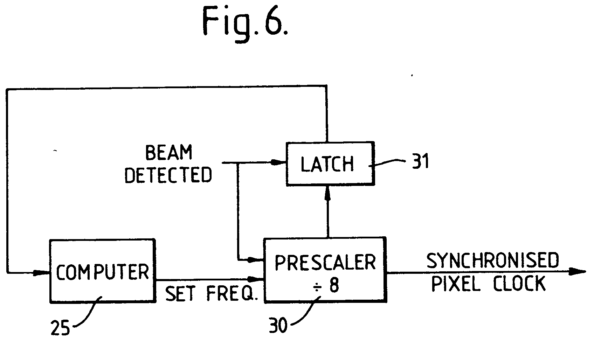

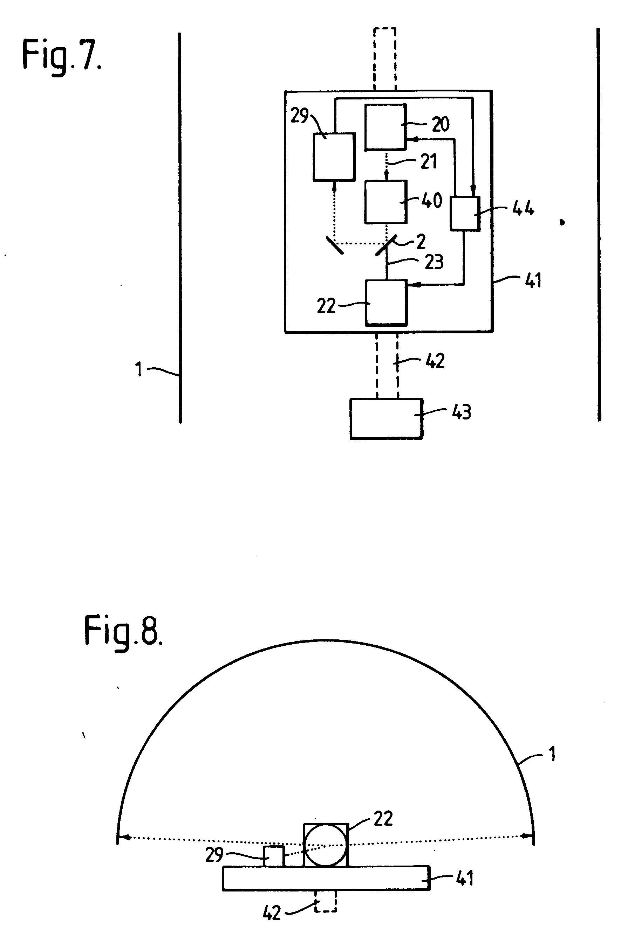

In order to operate the imagesetter, it is necessary to generate a pixel clock which is used to determine the modulation period of the exposing beam. Figure 6 illustrates an example of one arrangement for generating such a pixel clock. In this case, the pixel clock is fed to the laser 20 which also receives the image signal (in a conventional form) and generates a laser beam 21 which is modulated in each period determined by the pixel clock in accordance with the amplitude of the incoming image signal. This beam corresponds to the beam shown in Figure 1 and is reflected by the mirror 2 onto the cylinder 1 and through the cylinder onto the record medium. The rotational speed of the motor 22 is controlled by a controller 24 which responds to control signals from a computer 25. These components are mounted on the base 41 and indicated schematically at 44 in Figure 7. The pixel clock itself is generated by a voltage controlled oscillator (VCO) 26 within circuit 44 whose frequency is set by the computer 25. For reasons to be explained below, the output from the VCO 26 within circuit 44 is fed to a part selector circuit 27 whose output constitutes the pixel clock itself. The pixel clock is fed to the laser 20, as described above, and also to a counter 28. The output from the counter 28 is fed to the computer 25.

Each rotation of the mirror 2 is detected via a beam detector 29 on the base 41 which generates an output signal which is fed to the part selector 27 and also to other control components of the imagesetter, in a conventional manner.

One of the problems with imagesetters of this type is that the spinner supporting the mirror 2 runs at a variable speed. However, the pixel clock has to define exact angular positions and so the pixels have to be clocked out from the laser 20 at a rate which is related to the speed of rotation of the spinner. The inventors have found that the speed variation of a fast spinner is quite low and indeed as spinner speeds increase, it is expected that speed variations (both within one revolution, and between one revolution and the next) will become less. The inventors have thus devised a novel technique for determining the pixel clock. The essence of this technique is that the clock is allowed to free run for one revolution of the spinner or mirror, using the measured revolution time from the last revolution as a controlling value. That clock (once synchronised with the start of a revolution) can be used to clock out pixels around the revolution.

At high speeds, the revolution times for consecutive revolutions of the spinner motor 22 are very close or predictable. We use this to simplify pixel clocking.

The Part Selector 27 divides each cycle from the Voltage Controlled Oscillator (VCO) 25 into (say) 10 (very nearly) equal parts. When the Part Selector 27 sees the Beam Detect signal from the beam detector 29, it selects the nearest part, say the ith part. It then sends out as the Pixel Clock the signal from the VCO delayed by i parts.

At the end of the revolution, the process is repeated, and let us say that the jth part, is selected.

The computer 25 now knows the following things. The value of i and j, the number of pixels counted, and the frequency from the VCO. It is a simple matter from that to determine that the actual revolution time was

$$\frac{(10-i)}{10} + \text{Pixel Count} + \frac{j}{10}$$

times the VCO Clock period (reciprocal of its frequency).

The simplest prediction for the next revolution time is that it will be the same as the last. Using this, or some other, prediction, the computer 25 can select a new value for the VCO input, such that precisely the correct number of pixels will be clocked out during the next revolution (or, in practice, the relevant part of the next revolution).

It should be noted that given the computer 25 knows the relevant time, it can also detect whether the spinner is spinning near its correct speed, and can also control the speed of the spinner via the control 24 to get it near to the preferred value; slight errors are handled by adjusting the pixel clock speed, as described above.

Note that the dividing of the pixel clock into parts is one way of resynchronising the pixel clock to the start of a revolution.

Generation of the corrected signal to drive the VCO 26 for the next revolution from an error derived for the last revolution can be done in other ways. Simply timing the Beam Detected signals accurately is also possible. In this case, the circuit becomes effectively, a phase lock loop.

The traditional solution has been to use a shaft encoder on the spinner, which generates pulses evenly around a revolution; this pulse train is then electronically multiplied in time to provide the pixel clock. As spinners go faster, this is more expensive and less necessary. An encoder can also be made to provide the Beam Detect signal as well. However, the possibility then exists that the Beam Detect does not relate directly to the spinning mirror's position.

Due to small variations in speed of the spinner, it does not always accomplish a revolution which is a precise multiple of the number of pixels in a revolution. The effect of this is that the first pixel is not always an integral number of Pixel Intervals after the Beam Detect signal. This means we have to adjust the instant of the first (and hence successive) Pixel Clocks after the Beam Detect to better than (say) one tenth of a pixel. This value then becomes what is known as start of line jitter and this must be limited.

The object is to provide a Pixel Clock at (say) 80 MHz, synchronised with a Beam Detect signal.

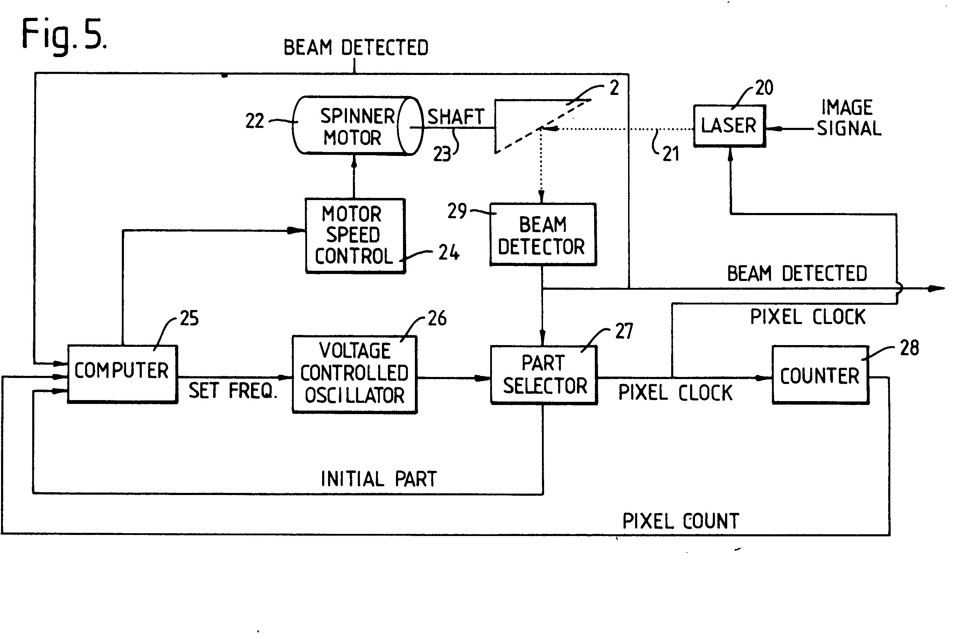

Figure 6 illustrates a circuit which enables this synchronisation to be achieved and is an alternative to the circuit shown in Figure 5. In this case, the computer 25 generates a controlled frequency output signal which is fed to a divide by 8 circuit 30. The divide by 8 circuit 30 also receives the beam detect signal from the detector 29, that signal also being fed to a latch 31. The method is as follows. The computer 25 generates a higher speed clock, in this case 8 times as fast, than the desired clock frequency (80 MHz) and this is fed to the divide by 8 circuit 30. The output of this circuit is the correct pixel clock speed. To synchronise it with the beam detect signal, that signal is used to reset the divide by 8 circuit. The value of the divide by 8 circuit 30 is latched in the latch 31 each time the beam detect signal occurs and this value gives the fraction or part of the pixel required for accurate adjustment of the pixel clock speed.

**Claims**

1. An imagesetter comprising a transparent record medium support for supporting on one surface a record medium having a radiation sensitive surface facing the support; scanning means for causing relative scanning movement between the record medium and a modulated radiation beam passing through the support onto the record medium; and focussing means for focussing the radiation beam substantially onto the one surface of the support.

2. An imagesetter according to claim 1, wherein the scanning means includes a rotatably mounted, mirror and the record medium support is at least partly cylindrical, the optical properties of the support being chosen to reduce distortion due to the spinning mirror.

3. An imagesetter according to any of the preceding claims, further comprising means for holding a record medium on the support under tension.

4. An imagesetter according to claim 3, wherein the holding means comprises spaced pairs of pinch rollers which can be subjected to torque in opposite directions to create tension in the record medium.

5. An imagesetter according to any of the preceding claims, further comprising means for automatically loading a record medium onto the support.

6. An imagesetter according to claim 5, wherein the automatic loading means includes guides extending alongside the path of movement of the record medium.

7. An imagesetter according to claim 5 or claim 6, when dependent on claim 4, wherein the pinch rollers form part of the loading means.

8. An imagesetter according to any of the preceding claims, further comprising means for generating the modulated radiation beam, the means being responsive to a pixel clock signal such that the beam is modulated in successive pixel periods;

means for generating the pixel clock signal; a beam detector for detecting the passage of the radiation beam past a fixed angular position relative to the support; and means for modifying the frequency of the pixel clock signal so as to synchronise the clock signal to the movement of the radiation beam relative to the support.

Fig.1.

Fig.2.

7

# Fig.3.

# Fig.4A.

# Fig.4B.

Fig.5.

BEAM DETECTED

22 — SPINNER MOTOR  SHAFT  /2  20 LASER  IMAGE SIGNAL
23  21

MOTOR SPEED CONTROL — 24

29 — BEAM DETECTOR

BEAM DETECTED

PIXEL CLOCK

25  26 VOLTAGE CONTROLLED OSCILLATOR  27 PART SELECTOR  28 COUNTER

COMPUTER  SET FREQ.  PIXEL CLOCK

INITIAL PART

PIXEL COUNT

EP 0 571 149 A2

# Fig.6.

BEAM
DETECTED

LATCH ——31

COMPUTER

SET FREQ.

PRESCALER
÷ 8

SYNCHRONISED
PIXEL CLOCK

25

30

# Fig.7.

# Fig.8.